# EUROPEAN PATENT SPECIFICATION

(11) **EP 1 064 851 B1**
(45) Date of publication and mention of the grant of the patent: **11.11.2009**
(21) Application number: 00200845.6
(22) Date of filing: 10.03.2000
(51) Int. Cl.: A23G 3/02, A23G 9/18, A23G 9/22, A23L 3/36

(54) **Method and apparatus for moulding a food product**
Verfahren und Vorrichtung zum Formen für Nahrungsprodukte
Procédé et appareil pour le moulage d'aliments

(30) Priority: 28.06.1999 GB 9915059
(43) Date of publication of application: 03.01.2001
(73) Proprietor: SOCIETE DES PRODUITS NESTLE S.A., 1800 Vevey (CH)
(72) Inventor: Leadbeater, John Michael, Strensall, York Y032 5AZ (GB)
(74) Representative: Ducreux, Marie

(56) References cited:
- AU-A- 3 077 777
- BE-A- 562 312
- DE-A- 2 243 463
- DE-A- 2 540 613
- FR-A- 618 575
- GB-A- 520 794

## Description

The present invention relates to the moulding of food products, in particular to the moulding of confectionery products such as gels, gums, high-boiled sweets, chocolate or fat-based products.

Food products, in particular confectionery products, have been produced using chilled rollers, such as in US 5,078,204 and GB 641,682, however the methods disclosed in these patents are directed to the use of pairs of counterrotating rollers with cavities on their surfaces in order to form shaped confectionery products linked by a thin web of confectionery product. GB 641,982 is directed to the production of chocolate confectionery articles only and the problems associated with adherence of chocolate to surfaces. In US 5,078,204 the moulded product is in the form of a solid ribbon and requires further processing.

The present invention overcomes the problems associated with the formation of the web linking the moulded confectionery products and alleviates the need for further processing after moulding. In addition the present invention aims to provide a new method and apparatus for the moulding and fast chilling of food products with reduced mechanical complexity and a reduced number of moulds which results in the reduction of investment, floor space and maintenance costs and costs to change the shape of the moulds.

Accordingly, the present invention relates to a method of moulding a food product comprising the steps;
a) depositing a solidifiable food product sequentially into a series of moulds attached to a chilled roller in an upper horizontal position wherein the food product at least partly solidifies in the mould;
b) rotating the chilled roller to move each mould with food product into contact with a conveyor belt sufficiently soon after deposition to prevent distortion of the exterior surface of the food product as the moulds move away from the horizontal; and
c) separating the at least partly solidified food product from the removable mould onto the conveyor belt.

According to this embodiment of the present invention the conveyor belt is arranged to wrap around the periphery of the moulds to prevent the exterior surface of the deposited food product from sagging as the moulds rotate away from the horizontal. Preferably the conveyor belt is arranged in contact with the exterior surface of the food product as soon as the moulds have moved an angle of no more than 90 degrees, preferably less than 60 degrees with respect to its position during depositing. The conveyor belt may constantly remain in contact with the moulds during an angular motion of the moulds of at least 90 degrees, preferably at least 120 degrees until the food product is separated from the moulds.
The separation of the at least partly solidified food product from the moulds may be carried out by an ejection means which may comprise means for the introduction of compressed air to a cavity behind each mould or through air nozzles at the bottom of each mould. The method may also optionally make use of a release agent in order to aid removal of the food product from the moulds.

The food product used may comprise warm fluid confectionery solutions or food ingredient solutions of a thermosetting nature, such as chocolate or high-boiled sugar. The food product is thus solidifiable and upon contact with the moulds on the chilled roller surface at least partly solidifies on the surface in contact with the moulds. This forms a skin on the outer surface of the food product even if it is not solidified at the centre and facilitates the easy removal of the solidified food product from the moulds.

The present invention is particularly suitable for food products, such as gels, gums, high-boiled sweets, chocolate or other fat-based confectionery products such as pralines which solidify preferably from 20°C to 30°C. The appropriate temperature of the liquid product and the roller temperature will depend on the product composition.

The present invention also relates to an apparatus for moulding food products comprising;
a chilled roller;
a series of moulds attached to the chilled roller;
a depositor for the sequential deposition of a solidifiable food product into the moulds at a horizontal upper position;
a conveyor belt arranged in contact with the exterior surface of the food product in the moulds sufficiently soon after deposition to prevent distortion of the exterior surface of the food product as the moulds move away from the horizontal position; and
means for separating the food product from the moulds onto the conveyor belt.

Preferably, the apparatus further comprises ejection means for ejecting the at least partly solidified food product from the moulds onto the conveyor belt.

In accordance with the present invention the series of moulds are arranged radially on the outer circumference of the chilled roller. The moulds used are preferably removable moulds which are individually separable from the chilled roller. The use of removable moulds according to the present invention enables the formation of various shaped food products dependant on the type of mould used. The moulds may comprise a single unit, with a plurality of recesses defined therein to form the plurality of moulds, arranged co-axially with respect to the chilled roller or may simply comprise a plurality of moulds arranged co-axially with respect to the chilled roller. Where a plurality of removable moulds are arranged co-axially with respect to the chilled roller the depositor is arranged in such a manner that the food product is deposited into each of the plurality of removable moulds at the same time.

Each single mould has a large surface area in contact with the chilled roller in order to enable heat transfer by conduction from the chilled roller to the mould. The moulds and chilled roller are made of material having good conductive properties.

Thus the present invention enables the use of a smaller number of moulds in comparison to traditional methods which require the use of several thousand moulds. This results in a reduction of the investment necessary and the use of removable moulds results in a reduction of the cost to change shape. The floor space used is also greatly reduced in comparison to traditional methods. The rapid cooling due to conductive heat transfer gives high output and can reduce product changes during cooling, for example sugar inversion. In addition the reduced mechanical complexity reduces investment and maintenance costs.

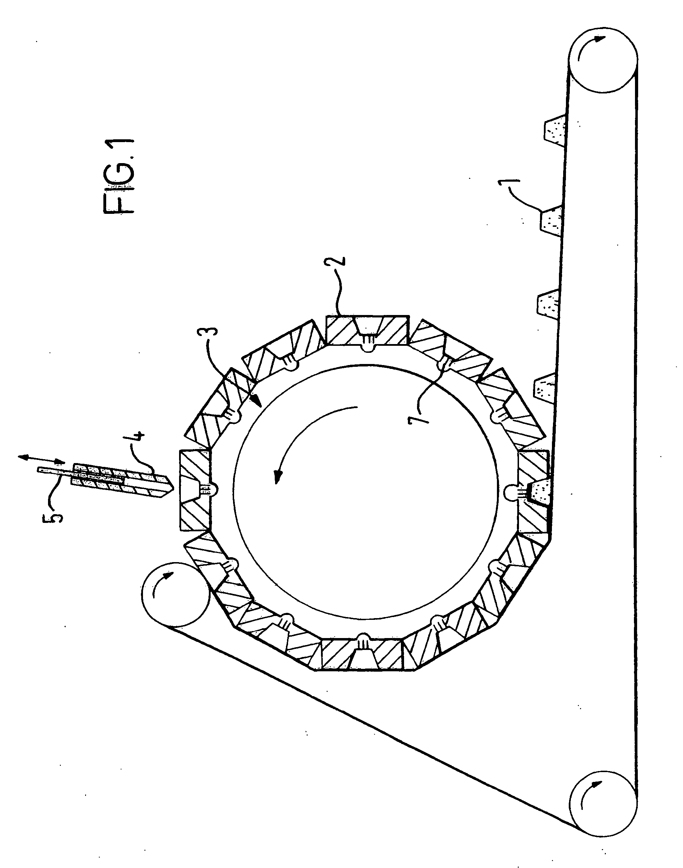

The present invention will now be described in further detail by way of example only with reference to the accompanying Figure 1 which is a schematic drawing of one embodiment of an apparatus for carrying out the method of the present invention.

Figure 1 shows an apparatus for performing a method of moulding a food product 1 according to the invention. The apparatus comprises a series of moulds 2 attached to a chilled roller 3. A depositor 4 is provided for the deposition of the solidifiable food product 5 into the moulds.

A motor (not shown) is arranged to rotate the chilled roller 3 in the direction as shown. The roller may rotate continuously whilst the depositor system reciprocates the roller motion horizontally so as to get a static arrangement of the mould and depositor during the depositing cycle. Another option may be to have the roller motion linked to the depositing cycle so that the roller stops during the depositing cycle and starts again to put an empty mould under the depositor.

A conveyor belt 6 is provided in contact with the food product in the mould sufficiently soon after deposition to prevent distortion of the exterior surface of the food product as the filled mould moves away from the horizontal. The food product 5 at least partly solidifies after deposition into the mould and is then ejected by ejection means 7, preferably compressed air, onto the conveyor belt in preformed shapes 1.

The conveyor belt may be of plastic laminated construction and the series of moulds may be metallic. The roller is slowly revolving with a preferred rotation speed from 1 to 4 revolutions per minute for chocolate and fat-based confection.

It is preferred that the roller is chilled to maintain a cavity temperature in the range of about 5°C to -25°C. The roller is cooled by a coolant circulation comprising a glycol/water mixture and the moulds are cooled through heat conduction to the roller. Air conditioning is required around the chilled roller in order to avoid condensation and ice formation. The chilled plate is also cooled by circulation of a coolant such as water/glycol mixtures.

The food products may be removed from the moulds via an ejection means which comprise means for the introduction of compressed air to a cavity behind each mould or through air nozzles at the bottom of each mould. A release agent, such as food grade oil, may be required to aid release from the mould. In some cases, the conveyor belt can be used to separate the food product from the mould. For example, sticky products such as high-boiled sweets or chocolate can adhere to the conveyor belt and can be simply removed without the need to employ an ejection means.

## Claims

1. An apparatus for moulding a food product comprising;
a chilled roller;
a series of moulds attached to the chilled roller;
a depositor for the sequential deposition of a solidifiable food product into moulds at a horizontal upper position;
a conveyor belt arranged in contact with the exterior surface of the food product in the moulds sufficiently soon after deposition of the food product to prevent distortion of the exterior surface of the food product as the moulds move away from the horizontal position; and
means for separating the food product from the moulds onto the conveyor belt.

2. An apparatus as claimed in claim 1 wherein the conveyor belt is arranged in contact with the exterior surface of the food product as soon as the moulds have moved an angle of no more than 90 degrees, preferably less than 60 degrees with respect to its position during depositing.

3. An apparatus as claimed in claim 1 or 2 wherein the conveyor belt constantly remains in contact with the moulds during an angular motion of the moulds of at least 90 degrees, preferably at least 120 degrees, until the food product is separated from the moulds.

4. An apparatus as claimed in any of claims 1 to 3 which further comprise an ejection means for ejection of the at least partly solidified food product from the moulds.

5. An apparatus as claimed in claim 4 wherein the ejection means comprises means for the introduction of compressed air to a cavity behind each mould or through air nozzles at the bottom of each mould.

6. An apparatus as claimed in any of claims 1 to 5 wherein the roller is chilled to maintain a cavity temperature of 5°C to -25°C.

7. An apparatus as claimed in any of claims 1 to 6 wherein the moulds are removable from the chilled roller.

8. A method of moulding a food product comprising the steps;
a) depositing a solidifiable food product sequentially into a series of moulds attached to a chilled roller in an upper horizontal position wherein the food product at least partly solidifies in the mould;
b) rotating the chilled roller to move each mould with food product into contact with a conveyor belt sufficiently soon after deposition to prevent distortion of the exterior surface of the food product as the moulds move away from the horizontal; and
c) separating the at least partly solidified food product from the moulds onto the conveyor belt.

9. The method as claimed in claim 8 wherein separating comprises ejecting the at least partly solidified food product via an ejection means.

10. The method as claimed in claim 9 wherein the ejection means comprises means for the introduction of compressed air to a cavity behind each mould or through air nozzles at the bottom of each mould.

11. The method according to any of claims 8 to 10 wherein a release agent is used to aid removal of the food product from the moulds.

12. The method according to any of claims 8 to 11 wherein the roller is chilled to maintain a cavity temperature of 5°C to -25°C.

13. The method as claimed in any of claims 8 to 12 wherein the food product is a confectionery article, preferably a chocolate or a fat-based confection.

## Patentansprüche

1. Vorrichtung zum Formen eines Nahrungsmittelprodukts, die aufweist:
eine gekühlte Rolle;
eine Reihe von Formen, die an der gekühlten Rolle angebracht sind,
eine Abscheidungsvorrichtung für die sequentielle Abscheidung eines verfestigbaren Nahrungsmittelprodukts in Formen in einer horizontal oberen Position;
ein Förderband, das hinreichend frühzeitig nach der Abscheidung des Nahrungsmittelprodukts in Kontakt mit der Außenoberfläche des Nahrungsmittelprodukts in den Formen angeordnet wird, um eine Verformung der Außenoberfläche des Nahrungsmittelprodukts zu verhindern, wenn die Formen sich von der horizontalen Position weg bewegen; und
Einrichtungen zum Trennen des Nahrungsmittelprodukts von den Formen auf dem Förderband.

2. Vorrichtung nach Anspruch 1, wobei das Förderband in Kontakt mit der Außenoberfläche des Nahrungsmittelprodukts angeordnet wird, sobald die Formen sich um einen Winkel von nicht mehr als 90 Grad, bevorzugt weniger als 60 Grad, in Bezug auf ihre Position während der Abscheidung bewegt haben.

3. Vorrichtung nach Anspruch 1 oder 2, wobei das Förderband während einer Winkelbewegung der Formen von wenigstens 90 Grad, bevorzugt wenigstens 120 Grad, beständig in Kontakt mit den Formen bleibt, bis das Nahrungsmittelprodukt von den Formen getrennt ist.

4. Vorrichtung nach einem der Ansprüche 1 bis 3, die ferner eine Auswurf- bzw. Ausstoßeinrichtung zum Ausstoßen des wenigstens teilweise verfestigten Nahrungsmittelprodukts aus den Formen aufweist.

5. Vorrichtung nach Anspruch 4, wobei die Auswurfeinrichtung Einrichtungen zur Einleitung von Druckluft in einen Hohlraum hinter jeder Form oder durch Luftdüsen auf dem Boden jeder Form aufweist.

6. Vorrichtung nach einem der Ansprüche 1 bis 5, wobei die Rolle gekühlt wird, um eine Hohlraumtemperatur von 5°C bis - 25°C aufrecht zu erhalten.

7. Vorrichtung nach einem der Ansprüche 1 bis 6, wobei die Formen von der gekühlten Rolle abnehmbar sind.

8. Verfahren zum Formen eines Nahrungsmittelprodukts, das die folgenden Schritte aufweist:
a) sequentielles Abscheiden eines verfestigbaren Nahrungsmittelprodukts in eine Reihe von Formen, die an einer gekühlten Rolle angebracht sind, in einer oberen horizontalen Position, wobei das Nahrungsmittelprodukt sich zumindest teilweise in der Form verfestigt;
b) Drehen der gekühlten Rolle, um jede Form mit Nahrungsmittelprodukt hinreichend frühzeitig nach der Abscheidung des Nahrungsmittelprodukts in Kontakt mit einem Förderband zu bewegen, um eine Verformung der Außenoberfläche des Nahrungsmittelprodukts zu verhindern, wenn die Formen sich von der Horizontalen weg bewegen; und
c) Trennen des wenigstens teilweise verfestigten Nahrungsmittelprodukts von den Formen auf dem Förderband.

9. Verfahren nach Anspruch 8, wobei das Trennen das Ausstoßen des wenigstens teilweise verfestigten Nahrungsmittelprodukts über eine Ausstoßeinrichtung aufweist.

10. Verfahren nach Anspruch 9, wobei die Ausstoßeinrichtung Einrichtungen zur Einleitung von Druckluft in einen Hohlraum hinter jeder Form oder durch Luftdüsen auf dem Boden jeder Form aufweist.

11. Verfahren nach einem der Ansprüche 8 bis 10, wobei ein Trennmittel verwendet wird, um das Entfernen des Nahrungsmittelprodukts aus den Formen zu unterstützen.

12. Verfahren nach einem der Ansprüche 8 bis 11, wobei die Rolle gekühlt wird, um eine Hohlraumtemperatur von 5°C bis -25°C aufrecht zu erhalten.

13. Verfahren nach einem der Ansprüche 8 bis 12, wobei das Nahrungsmittelprodukt ein Süßwarenartikel, bevorzugt eine Praline oder ein fettbasiertes Konfekt, ist.

## Revendications

1. Appareil pour mouler un produit alimentaire comprenant :
un rouleau réfrigéré ;
une série de moules fixés au rouleau réfrigéré ;
une couleuse pour déposer, séquentiellement, un produit alimentaire pouvant se solidifier dans des moules à une position supérieure horizontale ;
une bande transporteuse agencée pour entrer en contact avec la surface extérieure du produit alimentaire dans les moules, suffisamment tôt après le dépôt du produit alimentaire, afin d'empêcher une déformation de la surface extérieure du produit alimentaire tandis que les moules s'éloignent de la position horizontale ; et
un moyen pour séparer le produit alimentaire des moules sur la bande transporteuse.

2. Appareil selon la revendication 1, dans lequel la bande transporteuse est agencée pour entrer en contact avec la surface extérieure du produit alimentaire dès que les moules se sont déplacés sur un angle n'excédant pas 90°, de préférence inférieur à 60°, par rapport à leur position au moment du dépôt.

3. Appareil selon la revendication 1 ou 2, dans lequel la bande transporteuse demeure constamment en contact avec les moules durant un mouvement angulaire des moules d'au moins 90°, de préférence d'au moins 120°, jusqu'à ce que le produit alimentaire soit séparé des moules.

4. Appareil selon l'une quelconque des revendications 1 à 3, qui comprend, en outre, un moyen d'éjection pour éjecter, des moules, le produit alimentaire au moins en partie solidifié.

5. Appareil selon la revendication 4, dans lequel le moyen d'éjection comprend un moyen pour l'introduction d'air comprimé dans une cavité située derrière chaque moule ou via des buses à air sur le dessous de chaque moule.

6. Appareil selon l'une quelconque des revendications 1 à 5, dans lequel le rouleau est réfrigéré pour maintenir une température de cavité comprise entre -25°C et 5°C.

7. Appareil selon l'une quelconque des revendications 1 à 6, dans lequel les moules sont amovibles du rouleau réfrigéré.

8. Procédé pour mouler un produit alimentaire comprenant les étapes consistant à :
a) déposer, séquentiellement, un produit alimentaire pouvant se solidifier dans une série de moules fixés à un rouleau réfrigéré dans une position horizontale supérieure, le produit alimentaire se solidifiant, au moins en partie, dans le moule ;
b) faire tourner le rouleau réfrigéré pour déplacer chaque moule contenant le produit alimentaire jusqu'à ce qu'il entre en contact avec une bande transporteuse suffisamment tôt après le dépôt, pour empêcher une déformation de la surface extérieure du produit alimentaire tandis que les moules s'éloignent depuis l'horizontale ; et
c) séparer, des moules, le produit alimentaire, au moins en partie solidifié sur la bande transporteuse.

9. Procédé selon la revendication 8, dans lequel la séparation comprend l'éjection du produit alimentaire, au moins en partie solidifié, via un moyen d'éjection.

10. Procédé selon la revendication 9, dans lequel le moyen d'éjection comprend un moyen pour l'introduction d'air comprimé dans une cavité située derrière chaque moule ou via des buses à air sur le dessous de chaque moule.

11. Procédé selon l'une quelconque des revendications 8 à 10, dans lequel un agent de libération est utilisé pour faciliter l'extraction du produit alimentaire, hors des moules.

12. Procédé selon l'une quelconque des revendications 8 à 11, dans lequel le rouleau est réfrigéré pour maintenir une température de cavité comprise entre -25°C et 5°C.

13. Procédé selon l'une quelconque des revendications 8 à 12, dans lequel le produit alimentaire est un article de confiserie, de préférence un chocolat ou une confiserie à base de matières grasses.
